# EUROPÄISCHE PATENTSCHRIFT

(11) **EP 1 352 300 B1**
(45) Veröffentlichungstag und Bekanntmachung des Hinweises auf die Patenterteilung: **26.10.2005**
(21) Anmeldenummer: 02711771.2
(22) Anmeldetag: 14.01.2002
(51) Int. Cl.: G05B 19/418, G05B 19/042, H04L 29/12, H04L 12/40

(54) **NETZWERK MIT MEHREREN TEILNEHMERN SOWIE TEILNEHMER FÜR EIN DERARTIGES NETZWERK**
NETWORK COMPRISING A NUMBER OF NODES, AND CORRESPONDING NODES FOR A NETWORK OF THIS TYPE
RESEAU COMPORTANT PLUSIEURS NOEUDS, ET NOEUDS POUR UN RESEAU DE CE TYPE

(30) Priorität: 17.01.2001 DE 10101805
(43) Veröffentlichungstag der Anmeldung: 15.10.2003
(73) Patentinhaber: SIEMENS AKTIENGESELLSCHAFT, 80333 München (DE)
(72) Erfinder: BECHERER, Werner, 91334 Hemhofen (DE)
(86) Internationale Anmeldenummer: PCT/DE2002/000080
(87) Internationale Veröffentlichungsnummer: WO 2002/057859

(56) Entgegenhaltungen:
- DE-A- 19 806 297
- US-A- 5 586 305
- CORREIA J H ET AL: "A local bus for multi-chip-module-based microinstrumentation systems" SENSORS AND ACTUATORS A, ELSEVIER SEQUOIA S.A., LAUSANNE, CH, Bd. 68, Nr. 1-3, 15. Juni 1998 (1998-06-15), Seiten 460-465, XP004139876 ISSN: 0924-4247
- M. FONDL; L. LINSE: "The Future of Sensor Networks" SENSORS, Bd. 17, Nr. 12, Dezember 2000 (2000-12), Seiten 29-31, XP001070037 USA

## Beschreibung

Die Erfindung betrifft ein Netzwerk mit mehreren Teilnehmern nach dem Oberbegriff des Anspruchs 1 sowie einen Teilnehmer für ein derartiges Netzwerk. Teilnehmer können beispielsweise sein: Switches, speicherprogrammierbare Steuerungen, PC's oder Messumformer.

Aus dem deutschen Gebrauchsmuster 297 14 517.7 ist ein Messumformer bekannt, der mit einer Kommunikationsschnittstelle als Teilnehmer an ein Netzwerk mit mehreren Teilnehmern anschließbar ist. In den Messumformer ist zur Vorverarbeitung der von einem Sensor an einer Messstelle aufgenommenen Signale ein Mikroprozessor integriert. Ein Verarbeitungsprogramm des Mikroprozessors ist mit zahlreichen Parametern an die jeweilige Messaufgabe anpassbar. Z. B. können Nullpunkt und Messspanne, Dämpfung oder das Ausgangssignal im Fehlerfall sowie Kennliniencharakteristik des Messumformers als Parameter eingegeben werden. Nach der Eingabe sind diese Daten elektronisch in dem Messumformer abgespeichert. Neben diesen Daten zur Parametrierung des Messumformers müssen weitere teilnehmerspezifische Daten in dem Teilnehmer abgespeichert werden, welche die Konfiguration des Netzwerks betreffen, damit der Messumformer als Teilnehmer an dem Netzwerk betreibbar ist und über den Kommunikationskanal des Netzwerks mit den anderen Teilnehmern Daten austauschen kann. Das elektronische Abspeichern von Daten in dem Messumformer selbst bringt das Problem mit sich, dass im Fall einer Gerätestörung die Daten möglicherweise nicht am Messumformer abrufbar sind. Damit die Daten bei einem Austausch oder Ersatz eines defekten Messumformers direkt am Einbauplatz des Messumformers dennoch zugänglich sind, ist das Gehäuse des Messumformers mit einem verschließbaren Raum versehen, in welchem ein Informationsträger mit den Daten hinterlegt werden kann. Der Informationsträger enthält alle teilnehmerspezifischen Daten, die für den Betrieb des Teilnehmers am Netzwerk erforderlich sind. Zum Einlesen der Daten kann der Informationsträger unmittelbar in ein Ersatzgerät eingesteckt werden. In einem anderen Ausführungsbeispiel wird der Informationsträger in ein Programmiergerät gesteckt, das die teilnehmerspezifischen Daten über eine Kommunikationsschnittstelle an das Ersatzgerät überträgt. Die Verwendung eines derartigen Informationsträgers hat den Nachteil, dass sie gegenüber den für den eigentlichen Betrieb des Messumformers erforderlichen Komponenten einen zusätzlichen Aufwand bedeutet und dass eine sorgfältige Datenhaltung durchgeführt werden muss, damit auf dem Informationsträger immer die aktuell gültigen Daten gehalten werden. Zudem sind mit dem Einspielen der Daten von dem Informationsträger in das Ersatzgerät erhebliche Fehlermöglichkeiten verbunden, die gerade bei wenig ausgebildeten Bedienern oder in Stresssituationen, beispielsweise bei einem Anlagenstillstand, zu Fehlern führen können.

Der Erfindung liegt die Aufgabe zugrunde, ein Netzwerk mit mehreren Teilnehmern sowie Teilnehmer für ein derartiges Netzwerk zu schaffen, die es ermöglichen, dass ein defekter Teilnehmer durch einen neuen Teilnehmer am Netzwerk ersetzt werden kann, ohne dass Bedieneingriffe zur Abspeicherung der teilnehmerspezifischen Daten im Ersatzteilnehmer erforderlich sind.

Zur Lösung dieser Aufgabe weist das neue Netzwerk der eingangs genannten Art die im kennzeichnenden Teil des Anspruchs 1 angegebenen Merkmale auf. In den Ansprüchen 2 bis 4 sind vorteilhafte Weiterbildungen des Netzwerks, in den Ansprüchen 5 und 6 Teilnehmer für ein derartiges Netzwerk beschrieben.

Die Erfindung hat den Vorteil, dass Ersatzgeräte praktisch ohne manuelle Eingaben oder Bedieneingriffe mit den teilnehmerspezifischen Daten des ausgefallenen Geräts parametriert und/oder konfiguriert werden können. Bisher mussten Ersatzgeräte vor der Inbetriebnahme manuell oder durch Bedieneingriffe bei Verwendung des oben beschriebenen Informationsträgers konfiguriert werden, damit sie zu individuellen Teilnehmern am Netzwerk wurden. In Fällen, in denen diese Zeit oder das dadurch begründete Fehlerpotential nicht tolerierbar waren, mussten vorkonfigurierte Ersatzteilnehmer zum Austausch bereitgestellt werden. Dieser Cold-Standby bedeutete jedoch den doppelten Aufwand an Geräteausrüstung. Bei dem neuen Netzwerk werden durch die gewählte Art der Parametrierung und/oder Konfigurierung die Fehlermöglichkeiten eines Bedieners drastisch reduziert.

Wenn der erste und der zweite Teilnehmer im Netzwerk benachbarte Teilnehmer sind, wird insbesondere bei Punkt-zu-Punkt-Verbindungen zwischen den Teilnehmern eine geringe Kommunikationsbelastung des Netzwerks bei Austausch eines defekten Teilnehmers erreicht und jeder benachbarte Teilnehmer weiß, welcher Teilnehmer gerade an seinem Port angeschlossen ist. Zudem ist mit den Methoden der Autotopologie-Erkennung, beispielsweise mit dem Programm "CINeMa Auto Topology", immer durch das Ersatzgerät erkennbar, welcher Teilnehmer gerade der benachbarte im Netzwerk ist und die teilnehmerspezifischen Daten des jeweils ausgetauschten Netzwerkteilnehmers abgespeichert hat.

In vorteilhafter Weise stehen ständig aktuelle, teilnehmerspezifische Daten in dem jeweils benachbarten Teilnehmer zur Verfügung, wenn die Teilnehmer des Netzwerks dazu ausgebildet sind, bei einer Änderung ihrer teilnehmerspezifischen Daten diese an die benachbarten zur Aktualisierung des Speicherinhalts zu übertragen.

Der Teilnehmer, der als Ersatz eines Teilnehmers gleichen Typs an das Netzwerk angeschlossen wurde, oder der Teilnehmer, dessen Betriebsfähigkeit nach einem Ausfall wiederhergestellt wurde, fordert eine Übertragung der teilnehmerspezifischen Daten zu seiner Neuparametrierung und/oder Neukonfigurierung von dem benachbarten Teilnehmer über den Kommunikationskanal an. Auf diese Weise wird vorteilhaft ein automatischer Anlauf nach einem Ausfall oder Ersatz eines Teilnehmers ermöglicht.

Anhand der Zeichnungen, in denen Ausführungsbeispiele der Erfindung dargestellt sind, werden im Folgenden die Erfindung sowie Ausgestaltungen und Vorteile näher erläutert.

Es zeigen:
- Figur 1: ein Netzwerk mit verteilter Abspeicherung der teilnehmerspezifischen Daten,
- Figur 2: das Netzwerk nach Figur 1 mit Kommunikation nach einem Teilnehmeraustausch,
- Figur 3: ein Netzwerk mit Abspeicherung der teilnehmerspezifischen Daten in einem zentralen Teilnehmer,
- Figur 4: die Kommunikation in dem Netzwerk nach Figur 3 nach Austausch eines defekten Teilnehmers und
- Figur 5: ein Blockschaltbild eines Teilnehmers.

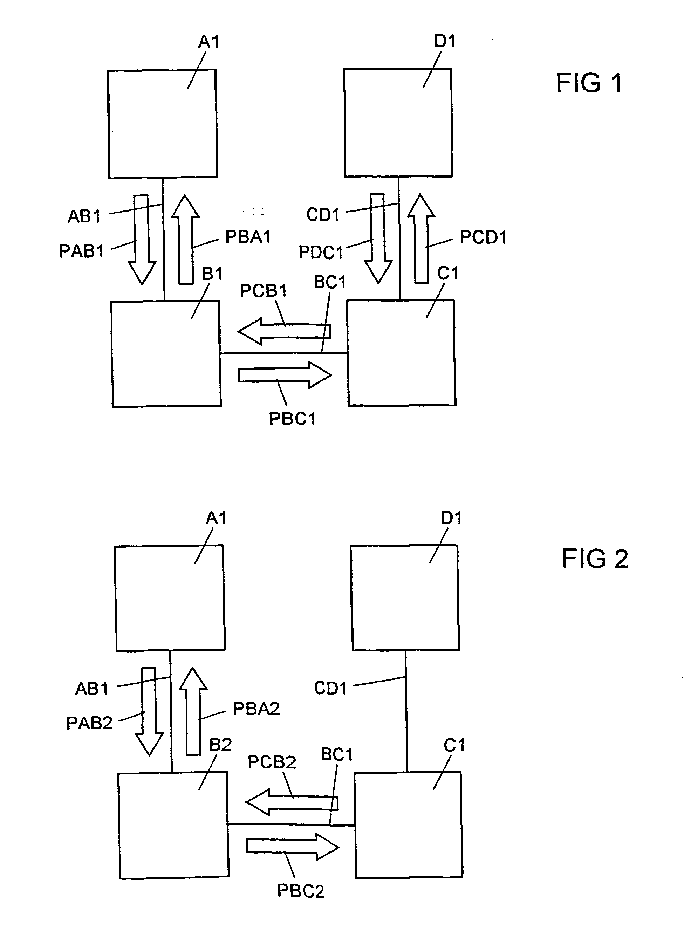

In dem in Figur 1 gezeigten Ausführungsbeispiel sind Teilnehmer A1, B1, C1 und D1 durch Leitungen AB1, BC1 bzw. CD1 miteinander verbunden. Die Leitungen AB1, BC1 und CD1 sowie die in den Teilnehmern A1, B1, C1 und D1 zur Kommunikation vorgesehenen Schaltungsteile bilden einen Kommunikationskanal, der beispielsweise der Ethernetspezifikation genügt. Die Erfindung kann aber selbstverständlich alternativ zu dem gezeigten Ausführungsbeispiel auch bei Netzwerken nach anderen Netzwerkspezifikationen eingesetzt werden. Bei dem dargestellten Ethernetnetzwerk sind die Teilnehmer A1, B1, C1 und D1 jeweils mit Punkt-zu-Punkt-Verbindungen verschaltet. Bei einer ersten Inbetriebnahme des Netzwerks senden die Teilnehmer an ihren jeweils benachbarten Teilnehmer Telegramme mit ihren teilnehmerspezifischen Daten, die zu ihrer Parametrierung und/oder Konfigurierung in einem internen Speicher abgelegt sind. Der jeweils empfangende Teilnehmer speichert diese Daten ebenfalls in einem dafür vorgesehenen internen Speicher ab. Entsprechend einem Pfeil PAB1 sendet somit der Teilnehmer A1 seine teilnehmerspezifischen Daten über die Leitung AB1 an den Teilnehmer B1. Der Teilnehmer B1 wiederum sendet seine teilnehmerspezifischen Daten entsprechend einem Pfeil PBA1 an den Teilnehmer A1 und entsprechend einem Pfeil PBC1 an den Teilnehmer C1. Ebenso sendet der Teilnehmer C1 seine teilnehmerspezifischen Daten an die Teilnehmer B1 und D1, wie es durch Pfeile PCB1 bzw. PCD1 in Figur 1 angedeutet ist. Ein Pfeil PDC1 veranschaulicht die Übertragung der teilnehmerspezifischen Daten des Teilnehmers D1 an den Teilnehmer C1. Der jeweils benachbarte Teilnehmer speichert die empfangenen teilnehmerspezifischen Daten des jeweiligen Senders ab.

Damit die teilnehmerspezifischen Daten in den Speichern der benachbarten Teilnehmer immer dem jeweils aktuellen Stand eines Teilnehmers entsprechen, sendet dieser bei jeder Änderung oder Korrektur erneut Telegramme mit seinen teilnehmerspezifischen Daten an seine Nachbarn. Wird beispielsweise ein Parameter des Teilnehmers B1 durch einen Bedieneingriff geändert, so sendet dieser erneut entsprechend den Pfeilen PBA1 und PBC1 seine teilnehmerspezifischen Daten an die Teilnehmer A1 bzw. C1, welche diese eventuell mit einer entsprechenden Versionskennzeichnung in ihrem jeweiligen Speicher ablegen.

Fällt nun beispielsweise der Teilnehmer A1 durch einen technischen Defekt aus, so kann dieser ohne weiteres durch einen neuen Teilnehmer gleichen Typs ersetzt werden. Der Teilnehmer B1 sendet auf Anforderung des Teilnehmers A1 die teilnehmerspezifischen Daten des Teilnehmers A1 zu dessen Parametrierung und/oder Konfigurierung zurück. Die Anforderung dazu erhält er von einem neu an das Netzwerk angeschlossenen Teilnehmer, welcher nach dem Anschluss die Stelle des bisherigen Teilnehmers A1 eingenommen hat. Auch derselbe Teilnehmer A1 kann diese Anforderung an den Teilnehmer B1 senden, wenn seine Betriebsfähigkeit nach einem Ausfall wiederhergestellt wurde. Die Anforderung wird jeweils bei dem ersten Neuanlauf des Teilnehmers an den Teilnehmer B1 übertragen. Damit ist ein automatischer Anlauf nach Ausfall oder Ersatz eines Teilnehmers am Netzwerk erreicht.

Alternativ zur Übertragung der teilnehmerspezifischen Daten auf Anforderung eines Ersatzteilnehmers oder eines reparierten Teilnehmers können die teilnehmerspezifischen Daten vom jeweils benachbarten Teilnehmer auch zyklisch über das Netzwerk übertragen werden. Damit ist jedoch eine Verringerung der Übertragungskapazität des Netzwerks verbunden.

Anhand Figur 2 wird das Verhalten bei einem Ersatz eines ausgefallenen Teilnehmers B1 durch einen Ersatzteilnehmer B2 erläutert. Für gleiche Teile werden in den Figuren 1 und 2 gleiche Bezugszeichen verwendet. Zur Anforderung der Übertragung seiner teilnehmerspezifischen Daten sendet der neue Teilnehmer B2 Telegramme "Get Parameter" entsprechend Pfeilen PBA2 und PBC2 an seine benachbarten Teilnehmer A1 bzw. C1. Diese Teilnehmer A1 und C1 senden jeweils Telegramme mit den teilnehmerspezifischen Daten des bisherigen Teilnehmers B1 an den Ersatzteilnehmer B2, wie es durch Pfeile PAB2 bzw. PCB2 veranschaulicht ist. Der neue Teilnehmer B2 verwendet die jeweils aktuellste Version der teilnehmerspezifischen Daten zu seiner Neuparametrierung und/oder Neukonfigurierung bei seinem Neuanlauf. Danach ist das Netzwerk ohne weitere Bedieneingriffe wieder voll funktionsfähig.

Da ein Ersatzgerät oder ein wiederhergestelltes Altgerät zunächst seine eigene Identität nicht kennt, wird die Anforderung der Übertragung der teilnehmerspezifischen Daten zu seiner Neuparametrierung und/oder Neukonfigurierung als unspezifiziertes Telegramm "Get Parameter" an den jeweiligen Nachbarn gesendet. Der oder die Nachbarn kennen die Identität des ausgefallenen Teilnehmers und stellen die teilnehmerspezifischen Daten zur Neuparametrierung und/oder Neukonfigurierung durch Übertragen entsprechender Telegramme bereit.

Falls mehrere Datensätze bereitgestellt werden, wird zum Neuanlauf die aktuellste Version verwendet.

Alternativ zu dem zuvor beschriebenen Ausführungsbeispiel kann es in dem Netzwerk auch Teilnehmer geben, die den Dienst der Nachbarn nutzen, selbst aber keine Speichermöglichkeiten bieten. Befindet sich beispielsweise an der Stelle des Teilnehmers A1 in Figur 1 ein derartiger Teilnehmer, so wird die Übertragung der teilnehmerspezifischen Daten des Teilnehmers B1 zum Teilnehmer A1 durch Rücksenden eines Telegramms "Reject Parameter" zurückgewiesen. Fällt der Teilnehmer B1 während des späteren Betriebs aus, können die teilnehmerspezifischen Daten lediglich vom benachbarten Teilnehmer C1 an den Teilnehmer B1 übertragen und für dessen Neuanlauf verwendet werden.

Alternativ zu dem zuvor anhand Figur 1 beschriebenen Netzwerk kann das Netzwerk auch derart ausgebildet werden, dass jeder Teilnehmer sein jeweils vorhandenes Wissen über das Netzwerk einschließlich seiner eigenen teilnehmerspezifischen Informationen an seine Nachbarteilnehmer weitergibt. In diesem Fall würde beispielsweise der Teilnehmer B1 in Figur 1 ein vom Teilnehmer A1 erhaltenes Telegramm mit dessen teilnehmerspezifischen Daten um seine eigenen teilnehmerspezifischen Daten ergänzen und an den benachbarten Teilnehmer C1 weitersenden. Entsprechend sendet der Teilnehmer C1 die empfangenen teilnehmerspezifischen Daten des Teilnehmers A1 und B1 ebenfalls ergänzt um seine teilnehmerspezifischen Daten an den Teilnehmer D1 weiter. Der Teilnehmer D1 vervollständigt die empfangenen Daten um seine eigenen teilnehmerspezifischen Daten und sendet das so gebildete Telegramm an den Teilnehmer C1 zurück, der es an den Teilnehmer B1 weiterleitet. Der Teilnehmer B1 sendet die vollständigen Daten an den Teilnehmer A1. Damit entsteht in jedem Teilnehmer des Netzwerks das komplette Netzabbild mit den teilnehmerspezifischen Daten aller Teilnehmer. Es ist somit ein Neuanlauf auch in den Fällen möglich, in denen mehrere Teilnehmer gleichzeitig durch neue Teilnehmer des jeweiligen Typs ersetzt werden.

Auch bei diesem Netzwerk ist eine Verwendung von Teilnehmern mit geringerer Speicherkapazität möglich. Diese Teilnehmer speichern lediglich ihre eigenen teilnehmerspezifischen Daten zur eigenen Parametrierung und/oder Konfigurierung. Telegramme, die das Netzabbild enthalten, werden um die eigenen teilnehmerspezifischen Daten ergänzt und an die benachbarten Teilnehmer weitergeleitet, ohne dass die teilnehmerspezifischen Daten der übrigen, an das Netzwerk angeschlossenen Teilnehmer im internen Speicher abgelegt werden.

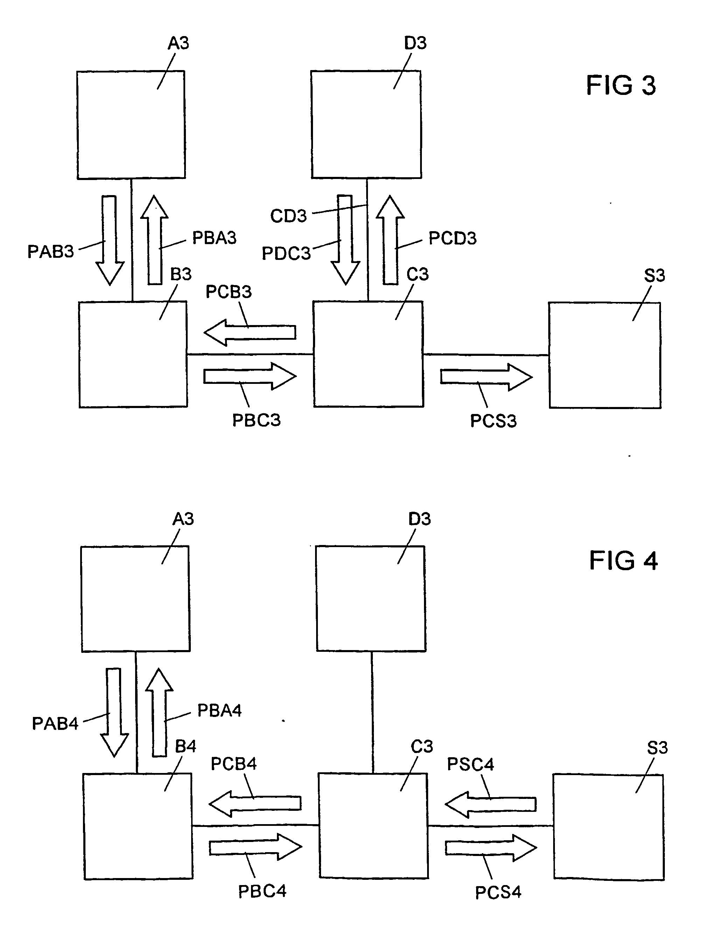

Figur 3 zeigt ein Ausführungsbeispiel, bei welchem die teilnehmerspezifischen Daten aller Teilnehmer am Netzwerk auf einem zentralen Server S3 abgelegt werden. Der Server S3 ist an einem Port eines Teilnehmers C3 angeschlossen. Mit zwei anderen Ports ist der Teilnehmer C3 mit einem Teilnehmer D3 bzw. einem Teilnehmer B3 verbunden. Der Teilnehmer B3 wiederum ist an einen Teilnehmer A3 angeschlossen. Bei der Inbetriebnahme des Netzwerks sendet der Teilnehmer A3 entsprechend einem Pfeil PAB3 in einem Telegramm seine teilnehmerspezifischen Daten an den Teilnehmer B3, der diese über den Teilnehmer C3 an den Server S3 weiterleitet, wie es durch Pfeile PBC3 und PCS3 angedeutet ist. Ebenso werden die teilnehmerspezifischen Daten des Teilnehmers B3 entsprechend Pfeilen PBC3 und PCS3 über den Teilnehmer C3 an den Server S3 geleitet. Zudem sendet der Teilnehmer B3 seine teilnehmerspezifischen Daten an den Teilnehmer A3, wie es durch einen Pfeil PBA3 verdeutlicht ist. Der Teilnehmer C3 sendet Telegramme mit seinen teilnehmerspezifischen Daten sowohl an den Teilnehmer B3 als auch an den Teilnehmer D3 und den Server S3 entsprechend Pfeilen PCB3, PCD3 bzw. PCS3. Der Teilnehmer D3 schließlich überträgt seine teilnehmerspezifischen Daten über den Teilnehmer C3 an den Server S3, wie es Pfeile PDC3 und PCS3 veranschaulichen. Nach der Inbetriebnahme sind somit die teilnehmerspezifischen Daten aller Teilnehmer A3, B3, C3 und D3 auf dem Server S3 abgelegt. Die Übertragung der teilnehmerspezifischen Daten an den Server S3 kann sowohl in der beschriebenen Weise online als auch offline, d. h. in einem getrennten Archivierungsschritt, erfolgen.

Selbstverständlich können teilnehmerspezifische Daten benachbarter Teilnehmer in jedem der Teilnehmer A3, B3, C3 und D3 abgelegt werden. Auch ein Abspeichern des kompletten Netzabbildes in den Teilnehmern ist möglich. Prinzipiell genügt es aber bei dem in Figur 3 gezeigten Ausführungsbeispiel, in den einzelnen Teilnehmern lediglich die Identität der benachbarten Teilnehmer abzuspeichern. Zur Kennzeichnung der Identität kann beispielsweise die IP-Adresse oder ein TAG verwendet werden. Die Kennzeichnung muss in der Anlage eindeutig sein.

Figur 4 zeigt das Netzwerk nach Figur 3, bei welchem der Teilnehmer B3 nach einem Defekt durch einen neuen Teilnehmer B4 ersetzt wurde. Für gleiche Teile werden in den Figuren 3 und 4 gleiche Bezugszeichen verwendet. Da der neue Teilnehmer B4 zunächst seine eigene Identität nicht kennt, richtet er Anforderungstelegramme "Get Parameter" entsprechend Pfeilen PBA4 und PBC4 an seine benachbarten Teilnehmer A3 bzw. C3. Die beiden Teilnehmer A3 und C3 übertragen jeweils in Telegrammen die am Netzwerk gültige Identität des früheren Teilnehmers B3 an den neu angeschlossenen Teilnehmer B4. Dies wird in Figur 4 durch Pfeile PAB4 bzw. PCB4 verdeutlicht. Damit ist der Ersatzteilnehmer B4 im Besitz einer am Netzwerk eindeutigen Identität. Mit dieser Identität richtet der Teilnehmer B4 ein Telegramm zur Anforderung der Übertragung seiner teilnehmerspezifischen Daten zu seiner Neuparametrierung und/oder Neukonfiguration an die benachbarten Teilnehmer A3 und C3. Dieses Anforderungstelegramm wird durch den Teilnehmer C3 an den Server S3 entsprechend einem Pfeil PCS4 weitergeleitet. Daraufhin sendet der Server S3 die teilnehmerspezifischen Daten, die er für den bisherigen Teilnehmer B4 abgespeichert hat, über den Teilnehmer C3 an den neuen Teilnehmer B4 zurück. In Figur 4 ist dies durch Pfeile PSC4 und PCB4 veranschaulicht. Der Ersatzteilnehmer B4 verwendet die empfangenen teilnehmerspezifischen Daten zur Neuparametrierung und/oder Neukonfigurierung bei seinem Neuanlauf. Das Netzwerk ist somit wieder betriebsbereit.

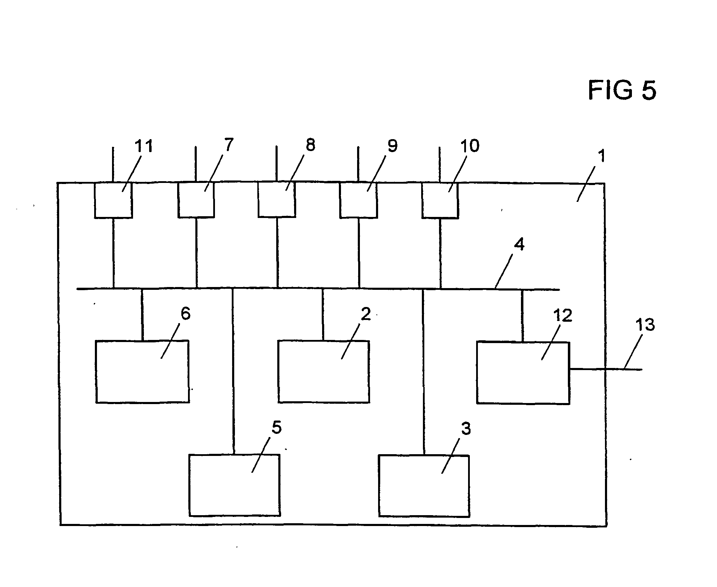

Figur 5 zeigt den prinzipiellen Aufbau eines Netzwerkteilnehmers am Beispiel eines Druckmessumformers 1, der beispielsweise als Teilnehmer B1 ... B4 in einem der in den Figuren 1 bis 4 gezeigten Netzwerke eingesetzt werden kann. Zentrale Komponente des Druckmessumformers ist ein Mikroprozessor 2, der ein Programm abarbeitet, das in einem Speicher 3 für die Applikations- und Kommunikationssoftware des Messumformers 1 abgelegt ist. Die verschiedenen, prozessorgesteuerten Komponenten sind durch einen internen Bus 4 miteinander verbunden. In einem Speicher 5 sind die eigenen teilnehmerspezifischen Daten zur Parametrierung und Konfigurierung des Messumformers 1 als Teilnehmer an einem Netzwerk ablegbar. Ein Speicher 6 ist für teilnehmerspezifische Daten weiterer Teilnehmer des Netzwerks vorgesehen. Zur Kommunikation mit weiteren Teilnehmern eines Netzwerks dienen vier Ports 7, 8, 9 und 10. An diese Ports kann jeweils ein weiterer Netzwerkteilnehmer nach Art einer Punkt-zu-Punkt-Verbindung angeschlossen werden. Entsprechend der im Speicher 3 hinterlegten Kommunikationssoftware und den im Speicher 5 hinterlegten Konfigurierdaten wird die Weiterleitung eingehender Telegramme festgelegt oder es werden eigene Telegramme gesendet. Die Kommunikationssoftware sorgt auch dafür, dass bei einer Verwendung des Messumformers 1 als Ersatzgerät die Speicher 5 und 6 in der zuvor beschriebenen Weise mit eigenen teilnehmerspezifischen Daten bzw. den teilnehmerspezifischen Daten weiterer, am Netzwerk befindlicher Teilnehmer beschrieben werden. Alternativ dazu kann aber auch eine manuelle Parametrierung und/oder Konfigurierung des Messumformers 1 durchgeführt werden, indem ein Bediengerät, das in Figur 5 der Übersichtlichkeit wegen nicht dargestellt ist, an eine Kommunikationsschnittstelle 11 oder einen der Ports 7 ... 10 angeschlossen wird. Als ein weiterer Bestandteil des Messumformers 1 ist ein Drucksensor mit einer Signalanpassschaltung 12 vorgesehen, auf den durch eine Leitung 13 ein Medium mit dem zu messenden Druck geführt ist.

## Patentansprüche

1. Netzwerk mit mehreren Teilnehmern, die über einen Kommunikationskanal zum Austausch von Daten miteinander verbunden sind, wobei zumindest ein erster Teilnehmer (B1) durch Abspeichern teilnehmerspezifischer Daten parametrier- und/oder konfigurierbar ist, **dadurch gekennzeichnet,**
**dass** zumindest ein zweiter Teilnehmer (C1, S3) einen Speicher (6) aufweist, in welchem teilnehmerspezifische Daten zur Parametrierung und/oder Konfigurierung des ersten Teilnehmers (B1, B3) abspeicherbar sind,
**dass** der erste Teilnehmer (B1, B3) dazu ausgebildet ist, bei Neuanschluss an das Netzwerk seine abgespeicherten teilnehmerspezifischen Daten an den zweiten Teilnehmer (C1, S3) zu übertragen,
**dass** der zweite Teilnehmer (C1, S3) dazu ausgebildet ist, in seinem Speicher (6) empfangene teilnehmerspezifische Daten des ersten Teilnehmers (B1, B3) abzuspeichern und diese Daten über den Kommunikationskanal an den ersten Teilnehmer (B2, B4) bei dessen Wiederinbetriebnahme oder Austausch zur Neuparametrierung und/oder Neukonfigurierung zu übertragen.

2. Netzwerk nach Anspruch 1, **dadurch gekennzeichnet, dass** der erste Teilnehmer (B1) und der zweite Teilnehmer (C1) im Netzwerk benachbart sind.

3. Netzwerk nach Anspruch 1 oder 2, **dadurch gekennzeichnet, dass** der erste Teilnehmer (B1) dazu ausgebildet ist, bei einer Änderung seiner teilnehmerspezifischen Daten diese an den zweiten Teilnehmer (C1) zur Aktualisierung des Speicherinhalts zu übertragen.

4. Netzwerk nach einem der vorhergehenden Ansprüche, **dadurch gekennzeichnet, dass** der erste Teilnehmer (B2) dazu ausgebildet ist, bei einem Neuanlauf, wenn der erste Teilnehmer (B2) als Ersatz eines Teilnehmers (B1) gleichen Typs an das Netzwerk angeschlossen wurde oder wenn die Betriebsfähigkeit des ersten Teilnehmers (B1) nach einem Ausfall wiederhergestellt wurde, beim zweiten Teilnehmer (C1) eine Übertragung der teilnehmerspezifischen Daten zu seiner Neuparametrierung und/oder Neukonfigurierung über den Kommunikationskanal anzufordern.

5. Teilnehmer für ein Netzwerk nach einem der vorhergehenden Ansprüche, der durch Abspeichern teilnehmerspezifischer Daten parametrier- und/oder konfigurierbar ist, **dadurch gekennzeichnet,**
**dass** der Teilnehmer (B1) dazu ausgebildet ist, bei Neuanschluss an das Netzwerk seine abgespeicherten teilnehmerspezifischen Daten an einen zweiten Teilnehmer (C1) des Netzwerks zu übertragen und
**dass** der Teilnehmer weiterhin dazu ausgebildet ist, bei einem Neuanlauf, wenn er als Ersatz eines Teilnehmers gleichen Typs an das Netzwerk angeschlossen wurde oder wenn seine Betriebsfähigkeit nach einem Ausfall wiederhergestellt wurde, eine Übertragung der teilnehmerspezifischen Daten zu seiner Neuparametrierung und/oder Neukonfigurierung beim zweiten Teilnehmer (C1) über den Kommunikationskanal anzufordern.

6. Teilnehmer für ein Netzwerk nach einem der vorhergehenden Ansprüche, **dadurch gekennzeichnet,**
**dass** ein Speicher (6) vorhanden ist, in welchem teilnehmerspezifische Daten zur Parametrierung und/oder Konfigurierung eines ersten Teilnehmers (B1) abspeicherbar sind,
**dass** der Teilnehmer dazu ausgebildet ist, teilnehmerspezifische Daten des ersten Teilnehmers (B1) zu empfangen und in seinem Speicher (6) abzuspeichern und diese Daten über den Kommunikationskanal an den ersten Teilnehmer (B2, B4) bei dessen Wiederinbetriebnahme oder Austausch zur Neuparametrierung und/oder Neukonfigurierung zu übertragen.

## Claims

1. Network having a plurality of subscribers which are connected to one another via a communication channel for the purpose of interchanging data, with at least one first subscriber (B1) being able to be parameterized and/or configured by storing subscriber-specific data,
**characterized**
**in that** at least one second subscriber (C1, S3) has a memory (6) which can store subscriber-specific data for parameterizing and/or configuring the first subscriber (B1, B3),
**in that** the first subscriber (B1, B3) is designed to transmit its stored subscriber-specific data to the second subscriber (C1, S3) when it is reconnected to the network,
**in that** the second subscriber (C1, S3) is designed to store received subscriber-specific data for the first subscriber (B1, B3) in its memory (6) and to transmit these data via the communication channel to the first subscriber (B2, B4) when the latter is started up again or swapped for the purpose of reparameterization and/or reconfiguration.

2. Network according to Claim 1, **characterized in that** the first subscriber (B1) and the second subscriber (C1) are adjacent in the network.

3. Network according to Claim 1 or 2, **characterized in that** the first subscriber (B1) is designed to transmit its subscriber-specific data to the second subscriber (C1) when said subscriber-specific data change in order to update the memory content.

4. Network according to one of the preceding claims, **characterized in that** the first subscriber (B2) is designed such that if the first subscriber (B2) was connected to the network as a substitute for a subscriber (B1) of the same type or if the operability of the first subscriber (B1) has been restored after a failure then upon restart it requests transmission of the subscriber-specific data for reparameterizing and/or reconfiguring it from the second subscriber (C1) via the communication channel.

5. Subscriber for a network according to one of the preceding claims, which can be parameterized and/or configured by storing subscriber-specific data, **characterized**
**in that** the subscriber (B1) is designed to transmit its stored subscriber-specific data to a second subscriber (C1) in the network when it is reconnected to the network, and
**in that** the subscriber is also designed such that if it was connected to the network as a substitute for a subscriber of the same type or if its operability has been restored after a failure then upon restart it requests transmission of the subscriber-specific data for reparameterizing and/or reconfiguring it from the second subscriber (C1) via the communication channel.

6. Subscriber for a network according to one of the preceding claims, **characterized**
**in that** a memory (6) is provided which can store subscriber-specific data for parameterizing and/or configuring a first subscriber (B1),
**in that** the subscriber is designed to receive subscriber-specific data for the first subscriber (B1) and to store said data in its memory (6), and to transmit these data via the communication channel to the first subscriber (B2, B4) when the latter is started up again or swapped for the purpose of reparameterization and/or reconfiguration.

## Revendications

1. Réseau avec plusieurs utilisateurs qui sont reliés entre eux pour l'échange de données par l'intermédiaire d'un canal de communication, au moins un premier utilisateur (B1) pouvant être paramétré et/ou configuré par la mémorisation de données spécifiques à l'utilisateur, **caractérisé par le fait que**
au moins un deuxième utilisateur (C1, S3) comporte une mémoire (6) dans laquelle des données spécifiques à l'utilisateur pour le paramétrage et/ou la configuration du premier utilisateur (B1, B3) peuvent être mémorisées,
le premier utilisateur (B1, B3) est conçu pour, lors du nouveau raccordement au réseau, transmettre ses données spécifiques mémorisées au deuxième utilisateur (C1, S3),
le deuxième utilisateur (C1, S3) est conçu pour mémoriser dans sa mémoire (6) des données spécifiques reçues du premier utilisateur (B1, B3) et pour transmettre ces données par l'intermédiaire du canal de communication au premier utilisateur (B2, B4) lors de la remise en service de celui-ci ou lors de l'échange de celui-ci pour son nouveau paramétrage et/ou sa nouvelle configuration.

2. Réseau selon la revendication 1, **caractérisé par le fait que** le premier utilisateur (B1) et le deuxième utilisateur (C1) sont voisins dans le réseau.

3. Réseau selon la revendication 1 ou 2, **caractérisé par le fait que** le premier utilisateur (B1) est conçu pour, lors d'un changement de ses données spécifiques à l'utilisateur, transmettre celles-ci au deuxième utilisateur (C1) pour actualiser le contenu de mémoire.

4. Réseau selon l'une des revendications précédentes, **caractérisé par le fait que** le premier utilisateur (B2) est conçu pour, lors d'un redémarrage, lorsque le premier utilisateur (B2) a été raccordé au réseau en remplacement d'un utilisateur (B1) du même type ou lorsque la fonctionnalité du premier utilisateur (B1) a été rétablie après une panne, demander par l'intermédiaire du canal de communication au deuxième utilisateur (C1) une transmission des données spécifiques à l'utilisateur pour son nouveau paramétrage et/ou sa nouvelle configuration.

5. Utilisateur pour un réseau selon l'une des revendications précédentes, qui est paramétrable et/ou configurable par mémorisation des données spécifiques à l'utilisateur, **caractérisé par le fait que**
l'utilisateur (B1) est conçu pour, lors d'un nouveau raccordement au réseau, transmettre ses données spécifiques mémorisées à un deuxième utilisateur (C1) du réseau, et
l'utilisateur est aussi conçu pour, lors d'un redémarrage, lorsqu'il a été raccordé au réseau en remplacement d'un utilisateur du même type ou lorsque sa fonctionnalité a été rétablie après une panne, demander par l'intermédiaire du canal de communication au deuxième utilisateur (C1) une transmission des données spécifiques à l'utilisateur pour son nouveau paramétrage et/ou sa nouvelle configuration.

6. Utilisateur pour un réseau selon l'une des revendications précédentes, **caractérisé par le fait que**
il y a une mémoire (6) dans laquelle des données spécifiques à l'utilisateur pour le paramétrage et/ou pour la configuration d'un premier utilisateur (B1) peuvent être mémorisées,
l'utilisateur est conçu pour recevoir des données spécifiques du premier utilisateur (B1) et les mémoriser dans sa mémoire (6) et pour transmettre ces données par l'intermédiaire du canal de communication au premier utilisateur (B2, B4) lors de la remise en service de celui-ci ou lors de l'échange de celui-ci pour le nouveau paramétrage et/ou la nouvelle configuration.
